**Europäisches Patentamt**

**European Patent Office**

**Office européen des brevets**

(19)

(11) Veröffentlichungsnummer: **0 215 342**
**B1**

(12) ## EUROPÄISCHE PATENTSCHRIFT

(45) Veröffentlichungstag der Patentschrift:
**29.11.89**

(21) Anmeldenummer: **86111761.2**

(22) Anmeldetag: **25.08.86**

(51) Int. Cl.⁴: **B01J 8/38**, F26B 17/10,
C01G 45/02

(54) Verfahren und Vorrichtung für die chemische, mechanische und/oder thermische Behandlung von Pulvern.

(30) Priorität: **30.08.85 CH 3750/85**

(43) Veröffentlichungstag der Anmeldung:
**25.03.87 Patentblatt 87/13**

(45) Bekanntmachung des Hinweises auf die Patenterteilung:
**29.11.89 Patentblatt 89/48**

(84) Benannte Vertragsstaaten:
**DE FR NL**

(56) Entgegenhaltungen:
**DE-A- 3 213 250**
**DE-B- 1 180 324**
**LU-A- 81 449**
**US-A- 4 057 908**

(73) Patentinhaber: **Metox Minerals AG, Aeschengraben 20c,
CH-4051 Basel(CH)**

(72) Erfinder: **Schneider, Gustav, Dr., Stettenerstrasse 26,
D-8741 Sondheim/Rhön(DE)**

(74) Vertreter: **Büchel, Kurt F., Dr., Patentanwalt Dr. Kurt F.
Büchel Bergstrasse 297, FL-9495 Triesen(LI)**

## Beschreibung

Die Erfindung betrifft eine Vorrichtung/ein Verfahren nach dem Oberbegriff des Anspruches 1, sowie nach dem Oberbegriff des Anspruches 2.

Reaktionen zwischen Feststoffen und Gasen und/oder Dämpfen werden unter anderem zur Herstellung von Metalloxiden und/oder zum Trocknen von Metall- und/oder Metalloxidpulvern herbeigeführt. Das Sprühtrocknungsverfahren scheidet für bestimmte Fälle aus verschiedenen Gründen aus. Wie beispielsweise in der DE-OS 3213250 dargelegt, werden die Reaktionen herkömmlich im Schüttung, oder sofern es sich um hochviskose Pasten, Schlämme, Filterkuchen oder Massen krümeliger Konsistenz handelt, im Zuge einer Zerstäubungstrocknung, z.B. mit Hilfe der rotierenden Wirbelschicht, durchgeführt.

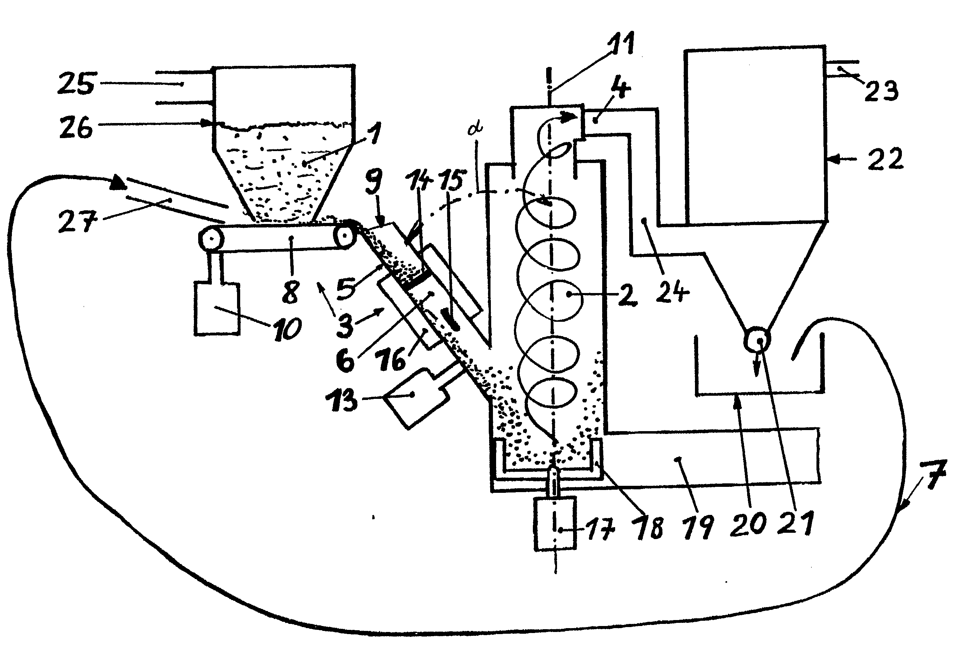

Bei der Wirbelschicht hat sich in der Praxis gezeigt, dass insbesondere die Zuführeinrichtungen für das krümelige Metalloxid nicht oder nur mangelhaft funktionieren. Eine im oberen Bereich des Behandlungsraumes angeordnete Fallförderung beeinträchtigt nicht nur die gegebenenfalls vorhandenen Wirbelströme nachteilig, sondern führt infolge der meist noch relativ hohen Temperaturen im oberen Bereich der Behandlungskammer zu einem ungewollten Erhitzen der gesamten Zuführeinrichtung, was wiederum ein ungewolltes Verbacken der zuzuführenden Feststoffe und/oder eine Funktionsbeeinträchtigung der Zuführeinrichtung selbst herbeiführen kann. Ausserdem kann es bei bestimmten Feststoffen vorkommen, dass das an und für sich fertige Endprodukt, welches sich bereits in schwebendem Zustand befindet, die Gasauslassöffnung nicht erreicht, sondern vielmehr mit den von oben frisch zugeführten Feststoffen die – wie bereits erwähnt – auch feucht sein können, verklebt und so zwangsläufig und ungewollt weiterbehandelt wird, was einen zusätzlichen Energieaufwand bewirken kann. Eine solche nachteilige Anordnung ergibt sich beispielsweise aus der Fig. 1 der Luxemburgischen Patentschrift 81449.

Eine seitliche Zuführeinrichtung mittels einer Speiseschnecke, wie sie beispielhaft in der Fig. 3 der erwähnten DE-OS dargestellt ist, kann für bestimmte, insbesondere feinkörnige Feststoffe, wie beispielsweise Manganoxidpulver, mit einer Korngrösse von etwa 0.5 µm nicht verwendet werden da die innere Reibung derartiger Feststoffe, wie die Erfahrung zeigt, so hoch ist, dass die Förderschnecke das Material zusammenpresst, das Förderrohr verstopft und die Förderung somit aussetzt.

Eine in der DE 1180324 (Fig.1) gezeigte Vorrichtung betrifft keine Wirbelschichtbehandlung und erfordert aus diesem Grund ebenso eine relativ hohe Anordnung der Zuführeinrichtung. Eine eigene Aufgabeschleuder in Form einer Zellenradschleuse ist jedoch erforderlich, um das Gut im Steigrohr zuverteilen.

Die Erfindung hat sich daher zur Aufgabe gestellt, eine Vorrichtung zu schaffen, die einen ungestörten kontinuierlichen Betrieb mit einer sicher funktionierenden Zuführeinrichtung ermöglichen, wobei sämtliche oben erwähnte Nachteile vermieden werden sollen. Mit dieser Vorrichtung soll ein erfinderisches Verfahren zur Herstellung von Manganoxidpulver geringer Teilchengrösse besonders vorteilhaft ausgeführt werden.

Darüber hinaus soll es ermöglicht werden, für bestimmte Anwendungen die Behandlung in einem Kreisprozess mehrfach kontinuierlich hintereinander ablaufen zu lassen.

Ausserdem stellt es sich die Erfindung zur Aufgabe, das Verfahren und die Vorrichtung so auszubilden, dass sie insbesondere für die Herstellung von Metalloxiden, insbesondere von Mn304, mit einer gleichmässigen Korngrösse, z.B. von etwa 0,5 µm und grosser Reinheit, bei guter Wirtschaftlichkeit, geeignet sind.

Die Lösung dieser Aufgaben ist im Kennzeichen der Patentansprüche 1 und 2 angegeben. Weitere bevorzugte Ausführungsformen der Erfindung sind in den Kennzeichen der Ansprüche 3 bis 5 beschrieben.

Die Anordnung eines Vor- und eines Zwischenlagers mit dem Fallrohr verringert in vorteilhafter Weise die thermischen Probleme bei der Zuführeinrichtung, da deren Hauptbauteile nun nicht mehr in Kontakt mit der heissen Behandlungskammer und in Richtung der Konvektionswärme liegen. Die durch die erfindungsgemässe Schleuse gebildeten Kammern ermöglichen ausserdem ein sicheres und problemloses Proportionieren der zuzuführenden Feststoffe. Die Einrichtungen für das Rückführen des. Gutes zwecks Durchlaufen wenigstens eines zweiten Behandlungsdurchganges können an sich bekannte Baugruppen wie Schächte, Saugrohre, Förderbänder usw. sein, die jedoch nur bei einem kontinuierlichen Kreisprozess Anwendung finden.

Durch Ungleichmässigkeiten der Materialzusammensetzung kann am Ende der Bedhandlungskammer die Austrittstemperatur variieren. Fällt sie, dann wird die Materialzufuhr eingangsseitig gedrosselt; steigt sie, dann wird die Zufuhr erhöht. Durch Regelung der Geschwindigkeit des dafür vorgesehenen Förderbandes können mittels eines einfachen Schaltungsaufbaus (der beispielsweise elektronisch funktionieren kann) im Zusammenhang mit der Schleuse die Feststoffe exakt dosiert werden. Selbstverständlich können auch weitere, an sich bekannte Einrichtungen, wie Waagen, lichtoptische Mengenmesser usw. als Ergänzung vorgesehen werden.

Die Schleuse verfügt über eine Einlass- und eine Auslassklappe, die mit einer Steuereinrichtung für das wechselweise Öffnen der Auslass- bzw. Einlassklappe versehen sind. Durch diese Massnahme ist ein ungewolltes Austreten der Gase durch das Zuführrohr sicher vermieden und trotzdem eine kontinuierliche Feststoffzufuhr gewährleistet.

Als günstiger Anstellwinkel zur Hochachse der Behandlungskammer für das Zuführrohr hat sich ein Winkel von höchstens 45 Grad erwiesen, wodurch sämtliche Feststoffe in körnigem Zustand leicht in die Behandlungskammer rutschen können, eventuell auch ohne dass Vibrationseinrichtungen vorgesehen sind.

Für rutschträge Feststoffe, wie beispielsweise Pasten usw. ist nach einer anderen Ausgestaltung der Erfindung vorgesehen, dass an dem Zuführrohr Einrichtungen für das Rütteln oder Vibrieren (vorzugsweise Ultraschallvibrieren) angreifen, wodurch gewährleistet ist, dass die Zufuhr nicht unterbrochen wird. Die Einrichtungen können dabei dauernd in Betrieb sein oder aber auch nur fallweise, beispielsweise beim Öffnen der Schleuse in Funktion gesetzt werden.

In der Zeichnung soll die erfindungsgemässe Vorrichtung gemeinsam mit dem erfindungsgemässen Verfahren an Hand der Herstellung von Manganoxid beispielhaft näher erläutert werden. Sie ist für den Betrieb mit einem Wirbelschichtsystem vorgesehen, wobei ein Antriebsmotor 17 unterhalb der Behandlungskammer 2 Angeordnet ist, der einen Rührer mit Schaufeln 18 im untersten Bereich der Behandlungskammer 2 antreibt.

Die Gasauslassöffnung 4 ist mit einem Rohr 24 an den Abscheider 22 angeschlossen, der eine Luftschleuse 21 aufweist, deren Ausgang über einem Behälter 20 angeordnet ist. An seinem oberen Ende weist der Abscheider 22 eine Gasaustrittsöffnung 23 auf.

Die Zuführeinrichtung 3 weist ein Zuführrohr 5 auf, welches in einem Winkel α von höchsten 45° zur Hochachse 11 der Behandlungskammer 2 an deren Wandung angeflanscht ist. In seiner Durchgangslichte weist das Zuführrohr 5 eine Schleuse 6 auf, die im wesentlichen durch eine Eigangsklappe 14, durch eine Ausgangsklappe 15 und durch eine Steuereinrichtung 16 für die Klappen 14, 15 gebildet ist. Bei geschlossener Eingangsklappe 14 ergibt sich eingangsseitig im Zuführrohr 5 ein als Vorlager bezeichneter Raum, während der zwischen den beiden Klappen befindliche Raum als Zwischenlager bezeichnet wird; das in diesem befindliche Material wird bei geschlossener Eingangsklappe 14 – wobei die Ausgangsklappe 15 jeweils geöffnet ist – in die Behandlungkammer 2 entleert. Anschliessend wird die Klappenstellung umgedreht, wodurch sich das Zwischenlager wiederum aus dem Vorlager füllt.

Die Einlassöffnung 9 am oberen Ende des Zuführrohres 5 ist unmittelbar vor dem Förderband 8 angeordnet, welches eine Einrichtung 10 zum Regulieren der Fördergeschwindigkeit aufweist. Oberhalb des Förderbandes 8 ist eine Auslassöffnung des Feststoffspeicher 26 und ein weiteres Zuführrohr 27 vorgesehen.

Beispiel:

3000 kg pulverförmiges, elektrolytisch gewonnenes Manganmetall mit einer Korngrösse von etwa 50 µm wird mit 300 Liter destilliertem Wasser vermengt und in an sich bekannter Weise in einer Mischmaschine mit Doppelmantel erwärmt, der von 150 bis 170°C heissem Wärmeträgeröl durchflossen ist. Während 1 bis 2 Stunden beginnt das Wasser zu kochen und das Manganmetall zu oxidieren; die Reaktion ist exotherm und läuft von alleine weiter. Der entstehende Wasserstoff wird mit dem überschüssigen Wasserdampf aus dem dicht geschlossenen System über eine Rohrleitung ins Freie abgezogen.

Sobald alles Wasser weitgehend entfernt ist bzw. reagiert hat, wird der Vorgang unter neuerlichem Zusatz von 3000 Liter Wasser, diesmal während 4 bis 5 Stunden wiederholt. Der Mischer wird nun geöffnet, und erst jetzt beginnt man zu rühren, wobei gleichzeitig ein Ventilator Luft durch die Masse zieht, die bis auf eine Restfeuchtigkeit von 30% getrocknet wird. Der Oxidationsgrad beträgt dann etwa 98% der Stöchiometrie. Während der Behandlung werden die Manganmetallpartikel durch den Angriff des Sauerstoffs zersprengt und liegen dann als um zwei Grössenordnungen kleinere Oxidpartikel vor.

Nach dem erfindungsgemässen Verfahren wird die nunmehr vorliegende krümelige Masse einer Behandlungskammer zugeführt, in der sie z.B. bei etwa 250°C unter Zufuhr von Luftsauerstoff fertig oxidiert und getrocknet wird, wobei gleichzeitig zusammenhaftende Agglomerate mechanisch zerteilt werden.

Die Krümelmasse 1 wurde aus der Mischtrommel in Behälter gefüllt, die durch die Eingangsöffnung 25 in den Feststoffspeicher/Zuführungstrichter 26 gekippt werden. Durch die gesteuerte Förderbewegung des Förderbandes 8 wird das Manganoxidpulver über die Einlassöffnung 9 in das Zuführrohr 5 gefördert. wo es zunächst auf eine geschlossene Einlassklappe 14 trifft und damit im Vorlager verharrt. Die Auslassklappe 15 der Schleuse 6 ist in dieser Stellung offen. Bei relativ grossem Anstellwinkel ist zweckmässig eine Einrichtung 13 für das Rütteln oder Vibrieren an dem Zuführrohr 5 in Betrieb, um ein leichteres Rutschen des Pulvers zu ermöglichen.

Sobald nun die Auslassklappe 15 schliesst, öffnet die Einlassklappe 14, gesteuert durch die Steuereinrichtung 16. Dadurch gelangt das Pulver nun aus dem Vorlager in das Zwischenlager zwischen den beiden Klappen. Danach öffnet wieder die Klappe 15 und die Klappe 14 schliesst. Gegebenenfalls unterstützt durch die Vibration rutscht nun das Pulver in die Behandlungskammer 2 auf die rotierende Aufnahmefläche mit den Leitschaufeln 18 und wird durch die Temperatur in der Behandlungskammer 2 getrocknet, gegebenenfalls nachoxidiert und zerkleinert. Es könnte auch noch weiteres destilliertes Wasser in die Behandlungskammer 2 eingespritzt oder auch in Dampfform durch die Gaszuführleitung 19 in die Behandlungskammer 2 eingebracht werden. Durch die Gaszuführleitung 19 wird jedenfalls z.B. auf 250°C erhitzte Luft oder Luftsauerstoff der Behandlungskammer 2 zugeführt, wodurch die Oxidation des Pulvers vervollständigt wird. Infolge der Rotation der Rührschaufeln 18 und des tangentialen Einblasens der Luft bzw. des Dampfes kommt es in der Behandlungskammer 2 zu einem Aneinanderreiben und Verwirbeln der Feststoffteilchen, wodurch die Teilchengrösse verringert, bzw. der Oxidationsgrad verbessert wird. Ab einer bestimmten Teilchengrösse (im vorliegenden Fall etwa 0,5 µm) verlassen die Feststoffteilchen gemeinsam mit dem Abgas (Wasserdampf und Luft) die Behandlungskammer 2 durch die Gasauslassöffnung 4 und werden im Abscheider 22 vom Abgas getrennt. Die Feststoffpartikel sinken nach unten in Richtung Luftschleuse, während das Abgas durch die Gasaustrittsöffnung 23 entweicht. Die Feststoffpartikel werden nunmehr durch die Luftschleuse 21 nach unten in den Behälter 20 abgelassen, aus welchem sie auf Qualität bzw. Oxidationsgrad geprüft werden können.

Ist die Oxidation noch nicht wunschgemäss erfolgt, so werden die Feststoffpartikel mittels nicht dargestellter Einrichtungen für das Rückführen (symbolisch durch den Pfeil 7 angedeutet) über das weitere Zuführrohr 27 wieder dem Förderband 8 zu einem neuerlichen Durchgang zugeführt. Dieser Prozess wird zyklisch solange wiederholt, bis die gewünschte Qualität des Pulvers erreicht ist.

Durch die vereinfachende Beispielhaftigkeit der Zeichnung und der Zeichnungsbeschreibung ist die Erfindung keineswegs eingeschränkt; es sind vielmehr verschiedenste dem Fachmann geläufige Abänderungen möglich, ohne dass dadurch der Rahmen der Erfindung verlassen würde. Selbstverständlich beschränkt sich die Erfindung auch nicht auf die Ausführung einer Behandlungskammer mit einem Wirbelschichtsystem.

## Patentansprüche

1. Wirbelschichtsbehandlungsvorrichtung zur chemischen, mechanischen und/oder thermischen Behandlung eines trockenen oder feuchten Pulvers mit einem Gas oder Dampf, dadurch gekennzeichnet, dass die zuführende Einrichtung des trockenen oder feuchten Pulvers von einem als Fallrohr ausgebildeten Zuführrohr (5) gebildet ist, das im unteren Bereich der Behandlungskammer (2) mündet, wobei in dem Fallrohr (5) eine Schleuse (6) mit zwei abwechselnd betätigbaren Klappen (14, 15) zur Dosierung des trockenen oder feuchten Pulvers vorgesehen ist.

2. Verfahren zur Herstellung von trockenem Manganoxidpulver geringer Teilchengrösse aus einem feuchten Pulver in einer Behandlungskammer einer Wirbelschichtsbehandlungseinrichtung nach Anspruch 1, dadurch gekennzeichnet, dass das feuchte Pulver vor dem Einritt in die Behandlungskammer (2) mit wenigstens einem ·Teil von bereits trockenem Pulver vermengt und in Abhängigkeit von der Temperatur am Ausgang der Behandlungskammer (2) in ein Vorlager (5) gebracht wird, das einen thermisch wirksamen Abstand von der Behandlungskammer (2) aufweist, wobei das feuchte Pulver im Ausgangszustand 10-60, vorzugsweise 20-40% Feuchtigkeit und unterstöchiometrische Sauerstoffmengen aufweist.

3. Vorrichtung nach Anspruch 1, dadurch gekennzeichnet, dass vor dem Zuführrohr (5) ein Förderband (8) vorgesehen ist, welches in eine Einlassöffnung (9) des Zuführrohres (5) mündet.

4. Vorrichtung nach Anspruch 1 oder 3, dadurch gekennzeichnet, dass das Zuführrohr (5) in einem Winkel α zur Hochachse (11) der Behandlungskammer (2) von höchstens 45° angeordnet ist.

5. Vorrichtung nach Anspruch 1, 3 oder 4, dadurch gekennzeichnet, dass an dem Zuführrohr (5) Einrichtungen (13) für das Rütteln oder Vibrieren, vorzugsweise Ultraschallvibrieren, angreifen.

## Claims

1. Fluidized-bed treatment apparatus for the chemical, mechanical and/or thermal treatment of a dry or moist powder with a gas or vapour, characterised in that the feed means for the dry or moist powder is a feed tube (5) which is in the form of a gravity tube and enters the lower region of the treatment chamber (2), a lock (6) having two alternately actuatable flaps (14, 15) for metering the dry or moist powder being provided in the gravity tube (5).

2. Process for the preparation of dry manganese oxide powder having a small particle size from a moist powder in a treatment chamber of a fluidized-bed treatment apparatus according tó Claim 1, characterised in that the moist powder is mixed with at least a part of already dried powder before entering the treatment chamber (2), and, depending on the temperature at the outlet of the treatment chamber (2), is introduced into a preliminary store (5) which is a thermally effective distance away from the treatment chamber (2), the moist powder in the initial state containing 10-60, preferably 20-40, % of moisture and substoichiometric amounts of oxygen.

3. Apparatus according to Claim 1, characterised in that a conveyor belt (8) is provided upstream of the feed tube (5) the said conveyor belt entering an inlet orifice (9) of the feed tube (5).

4. Apparatus according to Claim 1 or 3, characterised in that the feed tube (5) is arranged at an angle (α) of not ore than 45 degrees to the vertical axis (11) of the treatment chamber (2).

5. Apparatus according to Claim 1, 3 or 4, characterised in that means (13) for shaking or vibration, preferably ultrasonic vibration, engage the feed tube (5).

## Revendications

1. Dispositif de traitement en couche turbulente pour le traitement chimique, mécanique et/ou thermique d'une poudre sèche ou humide par un gaz ou de la vapeur, caractérisé par le fait que le dispositif qui amène la poudre sèche ou humide est constitué par un tube d'amenée (5) qui est réalisé sous la forme d'un tube de descente et qui débouche dans la régio inférieure de la chambre de traitement (2), cependant qu'un sas (6) qui comprend deux clapets (14, 15) pouvant être actionnés alternativement est prévu dans le tube de descente (5) pour doser la poudre sèche ou humide.

2. Procédé pour fabriquer de la poudre d'oxyde de manganèse sèche à faible granulométrie à partir d'une poudre humide dans une chambre de traitement d'un dispositif de traitement en couche turbulente selon la revendication 1, caractérisé par le fait que la poudre humide, avant son entrée dans la chambre de traitement (2), est mélangée avec une partie au moins de poudre déjà sèche et amenée, en fonction de la température, à la sortie de la chambre de traitement (2) dans un magasin (5) amont dont la distance à la chambre de traitement (2) est thermiquement efficace, la poudre humide présentant dans son état à la sortie une humidité comprise entre 10 et 60%, et de préférence entre 20 et 40%, et des teneurs en oxygène inférieures à la stoechiométrie.

3. Dispositif selon la revendication 1, caractérisé par le fait qu'il est prévu avant le tube d'amenée (5) une bande transporteuse (8) qui débouche dans un orifice d'entrée (9) du tube d'amenée (5).

4. Dispositif selon la revendication 1 ou 3, caractérisé par le fait que le tube d'amenée (5) est disposé sous un angle ($\alpha$) de 45° au plus par rapport à l'axe vertical (11) de la chambre de traitement (2).

5. Dispositif selon la revendication 1, 3 ou 4, caractérisé par le fait que des dispositifs (13) à secousses ou à vibrations, de préférence à vibrations ultrasoniques, agissent sur le tube d'amenée (5).

EP 0 215 342 B1